# FASCICULE DE BREVET EUROPEEN

(11) **EP 2 922 689 B1**
(45) Date de publication et mention de la délivrance du brevet: **09.01.2019**
(21) Numéro de dépôt: 13815037.0
(22) Date de dépôt: 19.11.2013
(51) Int. Cl.: B29C 70/08, B29C 70/88, F16B 5/07

(54) **ENSEMBLE D'UN INSERT MÉTALLIQUE ET D'UNE NAPPE DE MATÉRIAU COMPOSITE ET PIÈCE OBTENUE PAR MOULAGE D'UNE TELLE NAPPE**
ANORDNUNG AUS EINEM METALLEINSATZ UND EINER HÜLLE AUS EINEM VERBUNDWERKSTOFF, SOWIE DURCH FORMUNG SOLCH EINER HÜLLE GEWONNENES TEIL
ASSEMBLY OF A METAL INSERT AND A SHEET OF COMPOSITE MATERIAL AND PART OBTAINED BY MOULDING SUCH A SHEET

(30) Priorité: 20.11.2012 FR 1261041
(43) Date de publication de la demande: 30.09.2015
(73) Titulaire: Compagnie Plastic Omnium, 69007 Lyon (FR)
(72) Inventeur: TRESSE, David, F-70210 Polaincourt (FR)
(74) Mandataire: Remy, Vincent Noel Paul
(86) Numéro de dépôt international: PCT/FR2013/052786
(87) Numéro de publication internationale: WO 2014/080121

(56) Documents cités:
- DE-A1-102010 054 097
- DE-A1-102010 061 301
- GB-A- 2 238 977
- US-A1- 2008 003 401

## Description

La présente invention concerne le domaine technique des pièces réalisées en matériau composite.

Typiquement, un matériau composite comprend un renfort et une matrice de résine thermoplastique ou thermodurcissable. Le renfort peut prendre la forme de fibres courtes, de fibres longues ou d'un tissu de fibres. On rencontre des nappes de renforts secs, que l'on enduit de résine, mais on trouve aussi des nappes pré-imprégnés, que l'on peut draper directement. La mise en forme d'un matériau composite peut se faire notamment par un procédé d'injection, de compression ou d'infusion.

Il s'agit par exemple d'un ensemble en matériau composite constitué de résine polyester thermodurcissable qui imprègne des fibres de verre (20 à 30 % poids de ce renfort), avec notamment des charges et un catalyseur (durcisseur). Cet ensemble peut comprendre un film protecteur de polyéthylène sur chaque face.

L'ébauche est par exemple moulée par compression à chaud sous pression dans un moule fermé, en général par déplacement d'une partie mobile du moule contre une partie fixe du moule.

Les documents US 2008/003401 et GB 2 238 977 divulguent chacun un ensemble d'au moins un insert métallique et d'au moins une nappe de renfort pour matériau composite selon le préambule de la revendication 1.

Le document DE 10 2010 061301 divulgue un ensemble d'au moins un insert non métallique et d'au moins une nappe de renfort pour matériau composite présentant les caractéristiques énoncées dans le préambule de la revendication 1 sauf celle portant sur le fait que l'insert est métallique.

Le document DE 10 2010 054097 divulgue un ensemble d'au moins un insert métallique et d'au moins une nappe de renfort pour matériau composite dans lequel la nappe de renfort contient des fibres de renfort et dans lequel l'insert métallique comprend des saillies conformées pour traverser la nappe de renfort en passant entre les fibres de renfort.

Les difficultés qui se posent avec des pièces réalisées à partir d'ensemble en matériau composite sont leur assemblage et l'ajout ou la fixation d'autres composants de la structure d'un véhicule automobile.

En particulier, il peut être nécessaire d'y souder, d'y visser ou d'y coller la pièce. L'invention a pour but de proposer une solution à ce problème.

La présente invention a pour objet un ensemble d'un insert métallique et d'une nappe de renfort pour un matériau composite selon la revendication 1.

L'ensemble comporte un fût pour générer un "passage", le fût pouvant par exemple aussi être fileté pour permettre le vissage de la pièce ou l'ajout d'un composant de vissage qui traverse la nappe de renfort en écartant les fibres, donc sans les dégrader.

Avantageusement, le fût est conformé pour traverser la nappe de renfort sans la dégrader. On entend par « sans la dégrader » que la saillie ou le fût ne coupe pas, ne déchire pas et ne cisaille pas la nappe de renfort.

La feuille de renfort peut comprendre de la résine sous forme d'une pré-imprégnation ou de poudre qui recouvre sensiblement toutes les fibres.

Selon un second mode de réalisation, les fibres de renfort sont sous forme d'une nappe unidirectionnelle de fibres longues.

Selon un troisième mode de réalisation, les fibres sont sous formes d'un tissu de fibres longues.

Selon un quatrième mode de réalisation, les fibres sont sous forme de fibres coupées et réparties en désordre dans le matériau. Dans ce cas, elles présentent une longueur supérieure à 5mm, de préférence supérieure à 10mm idéalement supérieure à 20 mm.

Avantageusement, les fibres sont des fibres de carbone, de verre ou végétales.

On prévoit également un procédé d'incorporation d'un insert dans une nappe de renfort comprenant les étapes consistant à :
- déposer un insert sur la nappe ;
- faire pénétrer les saillies de l'insert à travers la nappe ; et
- plier par déformation plastique les saillies sur la nappe.

Avantageusement, dans un mode de mise en oeuvre particulier, les saillies sont repliées par un effort axial ou latéral.

L'étape de pli des saillies est réalisée dans un moule de fabrication d'une pièce en matériau composite. On entend par résine, un matériau organique appartenant à la famille des polymères thermodurcissables ou thermoplastiques.

L'invention trouve une application particulièrement intéressante pour réaliser des interfaces en bordure d'un ensemble tel que décrit plus haut ou d'une pièce en résine, et / ou au milieu de cette nappe ou pièce. Il peut s'agir d'interfaces planes ou d'interfaces avec fût de vissage traversant (qui traverse la pièce sans dégradation des fibres).

En particulier, un ensemble ou pièce comprenant un tel insert peut être plus facilement pris par un robot par aimantation ou par aspiration. Ceci est très avantageux dans la mesure ou l'aimantation et l'aspiration ne sont généralement pas utilisables sur des nappes de fibre. L'insert peut également servir à réaliser une soudure avec un autre composant métallique.

L'insert peut en outre comporter une surface plane ou excroissante d'interfaçage avec une autre pièce, cette surface pouvant être soit une surface plane pour soudure, aimantation ou aspiration, soit une surface formant une excroissance pour réalisée une fixation de la pièce finie.

L'invention a enfin pour objet une pièce en matériau composite obtenue par mise en forme et polymérisation d'un ensemble tel que décrit ci-dessus.

Dans un mode de réalisation particulièrement avantageux, la pièce en matériau composite est un composant de véhicule automobile.

L'invention sera mieux comprise à la lecture des figures annexées, qui sont fournies à titre d'exemples et ne présentent aucun caractère limitatif et dans lesquelles :
- La figure 1 est une vue en élévation en perspective d'une portion d'un ensemble selon l'invention.
- La figure 2 est une vue de dessous en perspective d'une portion d'un ensemble selon l'invention.
- Les figures 3a, 3b, 3c et 3d sont des représentations en coupe des étapes d'un procédé d'incorporation d'un ensemble de la figure 1.
- La figure 4 représente des exemples de mise en oeuvre de fûts de vissage pour un ensemble selon l'invention.

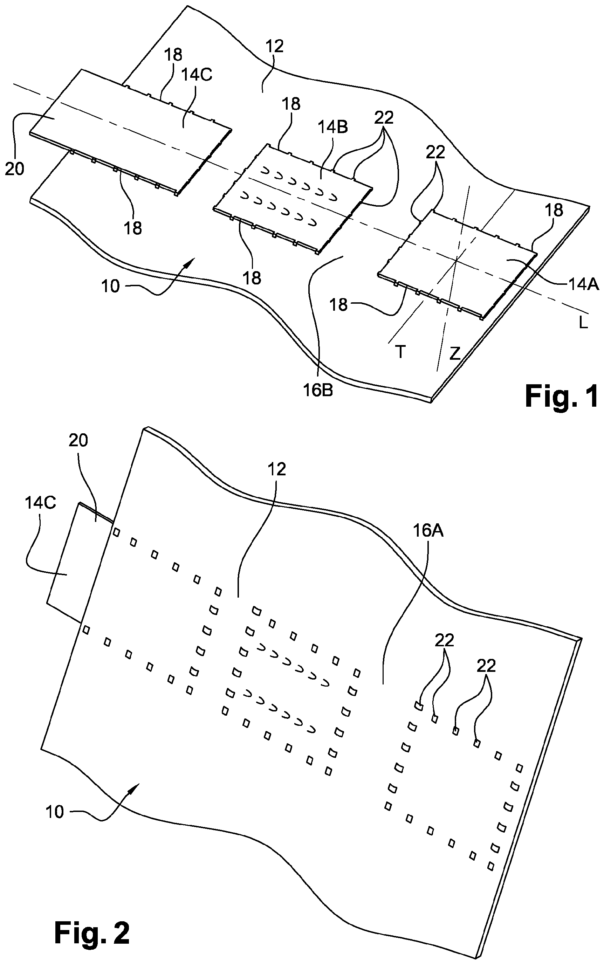

En référence aux figures 1 et 2, on a représenté seulement une petite portion d'un ensemble 10 muni d'une nappe de renfort pour matériau composite 12 et de trois inserts métalliques 14A, 14B, 14C.

Pour simplifier la description, la portion d'ensemble est appelée « ensemble » dans la suite de la description. L'ensemble est définit par une direction longitudinale selon un axe de symétrie L, une direction transversale selon un axe T et une direction traversante selon un axe Z.

Dans l'exemple, la nappe de renfort de matériau composite 12 a une forme rectangulaire et une épaisseur de 4 millimètres. Elle comporte une paroi inférieure 16A et une paroi supérieure 16B à la surface de laquelle sont disposés les inserts métalliques.

La feuille de matériau composite contient une résine et des fibres
de renfort de longueur supérieure ou égale à 1 cm. Les fibres de renfort sont des fibres de verre et forment des couches qui s'enchevêtrent et se superposent les unes aux autres.

Dans l'exemple, les inserts métalliques ont une forme rectangulaire et ont une épaisseur de 1mm, mais ils pourraient avoir une forme quelconque et une épaisseur comprise entre 0.5 et 1.5 mm.

Les inserts métalliques 14A, 14B, 14C délimitent des rectangles de plus petites dimensions que la nappe sur laquelle ils sont disposés. Les inserts métalliques ont ici un axe de symétrie longitudinale qui est confondu avec l'axe de symétrie longitudinale L de l'ensemble 10.

Dans les applications envisagées pour l'automobile, la taille de l'ensemble est le plus souvent très supérieure à celle des inserts. Dans l'exemple, deux des trois inserts 14A, 14B, disposés à la surface de la nappe délimitent une superficie comprise à l'intérieur de la forme rectangulaire délimitée par la nappe de matériau composite. Le troisième insert 14C forme un rectangle de plus grande longueur que les deux autres inserts 14A, 14B et il comporte une extrémité 20 qui dépasse à l'extérieur de la forme rectangulaire formée par la nappe de matériau composite.

Les inserts métalliques sont munis de saillies 22 réparties à intervalles réguliers, c'est-à-dire tous les 5 mm dans le cas présent, à proximité des bords des inserts et sur une partie centrale d'un insert 14B. Ces saillies 22 forment des petites dents rectangulaires et triangulaires pointues, qui prennent leur origine à proximité des bords des inserts. Elles permettent d'écarter les fibres lors de l'insertion des inserts et traversent la nappe de renfort pour matériau composite en passant entre les fibres et leurs extrémités sont recourbées sensiblement parallèlement à la paroi inférieure 16A de la nappe de matériau composite. Elles pourraient alternativement être sensiblement recourbées sur elles-mêmes, leurs extrémités étant dirigées vers la paroi supérieure.

Il serait aussi possible que l'ensemble comporte des fûts de vissage qui traversent la nappe de matériau composite en écartant les fibres, donc sans les dégrader. On notera que ces fûts sont en général situés en milieu d'insert plutôt que sur ses bords.

Les saillies sont conformées pour traverser la nappe de matériau composite sans détruire significativement les fibres de renforts mais en les écartant. Elles sont pliées par déformation plastique, par exemple à la manière qu'une agrafe de bureau. Ainsi, elles enserrent les fibres de renfort lorsqu'elles sont soumises à un effort de compression selon leur direction longitudinale. Les saillies peuvent également être pliées par déformation latérale et lorsqu'elles sont au bord de l'ensemble, elles peuvent être repliées vers l'extérieur ou vers l'intérieur de l'ensemble.

Selon un second mode de réalisation, les fibres de renfort sont une nappe unidirectionnelle de fibres longues.

Selon un troisième mode de réalisation, les fibres sont un tissu de fibres longues, c'est-à-dire que les fibres sont continues. Ainsi, elles sont sous la forme de fibres unidirectionnelles et leur longueur est identique à celle de la pièce.

Selon un quatrième mode de réalisation, les fibres sont des fibres coupées et sont réparties en désordre dans le matériau. Dans ce cas, elles présentent nécessairement une longueur supérieure ou égale à 2 cm.

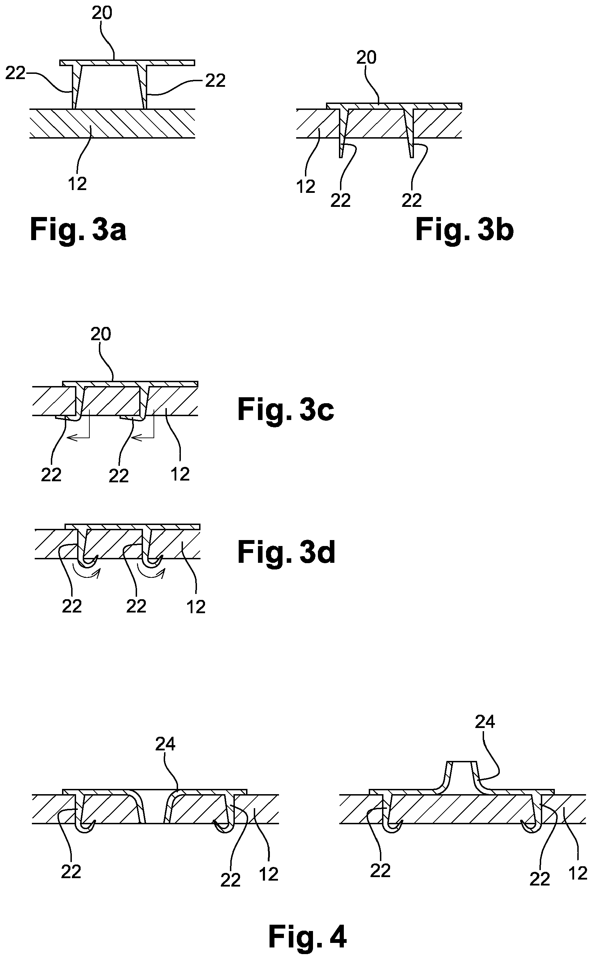

On va maintenant décrire un procédé d'incorporation d'un insert tel que décrit ci-dessus dans une nappe 12 de renfort. Comme montré sur la figure 3a, une première étape consiste à déposer l'insert sur la nappe de renfort. Conformément à la figure 3b, on fait pénétrer les saillies de l'insert à travers la nappe 12, les saillies 22 passant entre les fibres en écartant celles-ci. Puis, on fait plier par déformation plastique les saillies sur la nappe, soit par un effort appliqué selon l'axe Z, soit par un effort latéral, ce qui permet d'obtenir que les saillies soient repliées vers la nappe comme représenté à la figure 3d de l'exemple. Alternativement, les saillies pourraient être repliées de manière sensiblement parallèle à la nappe comme sur la figure 3c.

Dans un mode de mise en oeuvre particulier, l'étape de pli des saillies est réalisée dans un moule de fabrication d'une pièce en matériau composite. Pour cela, on introduit dans le moule au moins une nappe de renfort avec les inserts, on referme le moule, puis on injecte de la résine.

Dans un autre mode de mise en oeuvre particulier, l'étape de pli des saillies est réalisée préalablement à l'introduction de l'ensemble dans un moule de fabrication d'une pièce en matériau composite.

L'invention a enfin pour objet une pièce en matériau composite obtenue par mise en forme et réticulation d'un ensemble tel que décrit ci-dessus.

L'invention n'est pas limitée aux modes de réalisation présentés et d'autres modes de réalisation apparaîtront clairement à l'homme du métier. Il est notamment possible que les fibres de renfort soient des fibres de carbone, végétales ou d'un autre matériau. Egalement, il est possible de réaliser des interfaces en bordure ou au milieu d'une pièce en matériau composite. Il peut s'agir d'interfaces planes ou d'interfaces avec fût de vissage 24 traversant comme représenté à la figure 4. La feuille de matériau composite peut contenir des fibres de renfort de longueur supérieure ou égale à 1 cm. L'épaisseur de la nappe pourrait être différente et son épaisseur pourrait être comprise entre 0.5 et 10 mm, de préférence entre 1 et 7 mm, et dans certaines configurations entre 1 et 4 mm. Les dents de l'insert peuvent être situées au milieu de celui-ci afin de multiplier les points d'ancrage et d'améliorer la tenue à l'arrachement. Enfin, l'insert peut en outre comporter une excroissance d'interfaçage avec une autre pièce, cette excroissance pouvant être par exemple vissée, soudée ou encore surmoulée.

Des applications de cet ensemble pourraient être envisagées notamment pour la fabrication de planchers, de longerons, de pieds avants, arrières, ou du milieu, de panneaux d'ouvrant, de traverses de toit, ou encore pour des poutres ou des renforts structurels de véhicule.

## Revendications

1. Ensemble (10) d'au moins un insert métallique (14A, 14B, 14C) et d'au moins une nappe de renfort pour matériau composite (12), dans lequel :
la nappe de renfort (12) contient des fibres de renfort de longueur supérieure ou égale à un centimètre ;
l'au moins un insert métallique (14A, 14B, 14C) comprend des saillies (22) conformées pour :
- traverser la nappe de renfort (12) en passant entre les fibres de renfort ; et
- se plier par déformation plastique en enserrant les fibres de renfort,
**caractérisé en ce qu'**il comprend en outre un fût de vissage (24) configuré pour traverser la nappe de renfort (12) en écartant les fibres.

2. Ensemble (10) selon la revendication 1, dans lequel les saillies (22) ont une extrémité effilée.

3. Ensemble (10) selon l'une quelconque des revendications précédentes dans lequel les saillies ou le fût (24) sont conformés pour traverser la nappe de renfort sans couper, sans déchirer et sans cisailler la nappe de renfort.

4. Ensemble (10) selon l'une quelconque des revendications précédentes, dans lequel les fibres sont une nappe unidirectionnelle de fibres longues.

5. Ensemble (10) selon l'une quelconque des revendications 1 à 3, dans lequel les fibres sont sous forme de fibres coupées et sont réparties en désordre dans le matériau.

6. Ensemble (10) selon l'une quelconque des revendications précédentes, dans lequel les fibres sont des fibres de carbone, de verre ou végétales.

7. Pièce en matériau composite **caractérisée en ce qu'**elle est obtenue par mise en forme et polymérisation d'un ensemble selon l'une quelconque des revendications 1 à 6.

8. Pièce en matériau composite selon la revendication précédente, la pièce étant un composant de véhicule automobile.

## Patentansprüche

1. Anordnung (10) aus mindestens einem Metalleinsatz (14A, 14B, 14C) und aus mindestens einer Verstärkungshülle für Verbundwerkstoff (12), wobei
die Verstärkungshülle (12) Verstärkungsfasern mit einer Länge größer oder gleich einem Zentimeter enthält,
der mindestens eine Metalleinsatz (14A, 14B, 14C) Vorsprünge (22) umfasst, die ausgebildet sind, um:
die Verstärkungshülle (12) zu durchqueren, indem er zwischen den Verstärkungsfasern hindurch läuft; und
sich durch plastische Verformung zu falten, indem er die Verstärkungsfasern umschließt,
**dadurch gekennzeichnet**, sie ferner einen Verschraubungsschaft (24) umfasst, der ausgestaltet ist, um die Verstärkungshülle (12) zu durchqueren, indem er die Fasern auseinanderspreizt.

2. Anordnung (10) nach Anspruch 1, wobei die Vorsprünge (22) ein verjüngtes Ende aufweisen.

3. Anordnung (10) nach einem der vorhergehenden Ansprüche, wobei die Vorsprünge oder der Schaft (24) ausgebildet sind, um die Verstärkungshülle zu durchqueren, ohne die Verstärkungshülle durchzuschneiden, durchzureißen oder zu scheren.

4. Anordnung (10) nach einem der vorhergehenden Ansprüche, wobei die Fasern eine unidirektionale Hülle aus langen Fasern ist.

5. Anordnung (10) nach einem der Ansprüche 1 bis 3, wobei die Fasern die Form von geschnittenen Fasern haben und unregelmäßig in dem Werkstoff verteilt sind.

6. Anordnung (10) nach einem der vorhergehenden Ansprüche, wobei die Fasern Kohle-, Glas- oder Pflanzenfasern sind.

7. Teil aus Verbundwerkstoff, **dadurch gekennzeichnet, dass** es durch Formen und Polymerisieren einer Anordnung nach einem der Ansprüche 1 bis 6 erhalten wird.

8. Teil aus Verbundwerkstoff nach dem vorhergehenden Anspruch, wobei das Teil ein Bauteil eines Kraftfahrzeugs ist.

## Claims

1. Assembly (10) comprising at least one metal insert (14A, 14B, 14C) and at least one reinforcing sheet for composite material (12), wherein:
the reinforcing sheet (12) contains reinforcing fibres of length greater than or equal to one centimetre;
the at least one metal insert (14A, 14B, 14C) comprises protrusions (22) shaped to:
- traverse the reinforcing sheet (12) going between the reinforcing fibres; and
- fold by plastic deformation, enclosing the reinforcing fibres,
**characterised in that** it further comprises a screwing barrel (24) configured to traverse the reinforcing sheet (12) by separating the fibres.

2. Assembly (10) according to claim 1, wherein the protrusions (22) have a sharp end.

3. Assembly (10) according to any one of the preceding claims, wherein the protrusions or the barrel (24) are shaped to traverse the sheet without cutting, without tearing and without shearing the reinforcing sheet.

4. Assembly (10) according to any of the preceding claims, wherein the fibres are a unidirectional sheet of long fibres.

5. Assembly (10) according to any one of claims 1 to 3, wherein the fibres consist of cut fibres distributed randomly in the material.

6. Assembly (10) according to any one of the preceding claims, wherein the fibres are carbon, glass or plant fibres.

7. Part made of composite material **characterised in that** it is obtained by shaping and polymerising an assembly according to any one of claims 1 to 6.

8. Part made of composite material according to the preceding claim, the part being a motor vehicle component.
